# Europäisches Patentamt
## European Patent Office
## Office européen des brevets

(19)

(11) Numéro de publication: **0 080 963**
**A1**

(12)

# DEMANDE DE BREVET EUROPEEN

(21) Numéro de dépôt: 82630069.1

(22) Date de dépôt: 06.07.82

(51) Int. Cl.³: **C 03 B 37/05**
**C 03 B 37/07**

(30) Priorité: 26.11.81 LU 83788

(43) Date de publication de la demande:
08.06.83 Bulletin 83/23

(84) Etats contractants désignés:
AT BE CH DE FR GB IT LI NL SE

(71) Demandeur: ARBED S.A.
Avenue de la Liberté 19
L-2930 Luxembourg(LU)

(72) Inventeur: Mathgen, Georges
41 rue de Beggen
L-1221 Luxembourg(LU)

(72) Inventeur: Pruem, Charles
41 rue Jean Jaurès
L-3490 Dudelange(LU)

(72) Inventeur: Scherer, Robert
30 Grand-Rue
L-1660 Luxembourg(LU)

(72) Inventeur: Clees, Roland
66 rue de Tattenberg
L-3569 Dudelange(LU)

(74) Mandataire: Neyen, René
Administration Centrale de l'Arbed Case postale 1802
L-2930 Luxembourg(LU)

(54) Système de régulation de la marche d'une installation d'effilage de fibres minérales.

(57) Un four (1) est monté sur des pesons (2) et comporte un dispositif de remplissage (14), chargé par intermittence qui alimente le creuset (13) du four en continu. Le jet de matière minérale fondue (3) sort en continu du four (1) par un trou de coulée (4) et tombe sur un rotor (5) couplé à un dispositif d'entraînement (6). Le débit d'air assurant le transport et la distribution des fibres dans la chambre à lame est produit par le système (12). Un capteur (8), de préférence une caméra pyrométrique, transmet un signal représentatif de la température du jet (3) au système de calcul (9) qui détermine sa viscosité. Le débit du jet (3) est calculé à partir de mesures du poids du four (1) fournies par les pesons (2). Ces mesures se font p.ex. entre les opérations de rechargement du dispositif de remplissage (14). Un dispositif de régulation (7) commande, en fonction de données de fonctionnement optimal calculées par le système (9) à partir de la viscosité du débit de jet, la vitesse de rotation des roues du spinner ainsi que la quantité de l'air assurant le transport des fibres.

./...

EP 0 080 963 A1

_FIG.1_

Système de régulation de la marche d'une installation d'effilage de fibres minérales.

La présente invention concerne un système de régulation de la marche d'une installation d'effilage de fibres minérales.

De telles installations comportent notamment des spinners, c.à d. une ou plusieurs roues tournant à vitesse élevée (de l'ordre de 5000 tours par minute) et qui transforment un jet liquide de roches, de laitier ou de verre fondu sortant d'un four, en fibres minérales.

Les spinners mono- ou multiroues utilisés actuellement pour la fabrication de la laine minérale tournent à vitesse constante. Cette vitesse est choisie en fonction d'un débit et d'une viscosité moyenne du jet liquide frappant le spinner. Chaque variation de débit ou de viscosité entraîne une dégradation de l'efficacité de l'effilage, soit en augmentant le nombre de perles, c.à d. de nodules non fibérisés, soit en produisant des fibres de caractéristiques géométriques non souhaitées, p.ex. des fibres trop fines et/ou trop courtes. Or, les fours de fusion de matières non métalliques à déversement continu et particulièrement les cubilots utilisés presqu'exclusivement dans la fabrication de laine minérale produisent des jets à débit variable dans le temps et ne permettent pas jusqu'à présent de mesurer le débit réel du jet sortant. Ces jets étant en plus variables en température, donc de viscosité changeante, le rendement des spinners ainsi que la constance de la qualité de la laine produite s'en ressentent fortement.

La présente invention a pour but d'éliminer les défauts précédemment décrits, d'améliorer le rendement des installations ainsi que la qualité des fibres, en proposant un système de régulation qui tient compte des paramètres significatifs et accessibles des installations.

Ce but est atteint par le système selon l'invention, qui comporte des moyens pour déterminer le débit et la viscosité du jet sortant du four, ainsi que les moyens de réglage du spinner en fonction de ces variables.

Des variantes préférentielles de la mise en œuvre de l'invention sont décrites dans les sous-revendications.

Par suite de la possibilité d'intervention instantanée dans le processus, il est possible d'optimiser en permanence les conditions de fonctionnement du spinner en fonction de la composition, de la viscosité et du débit du jet liquide. Il s'ensuit une diminution notable des déchets.

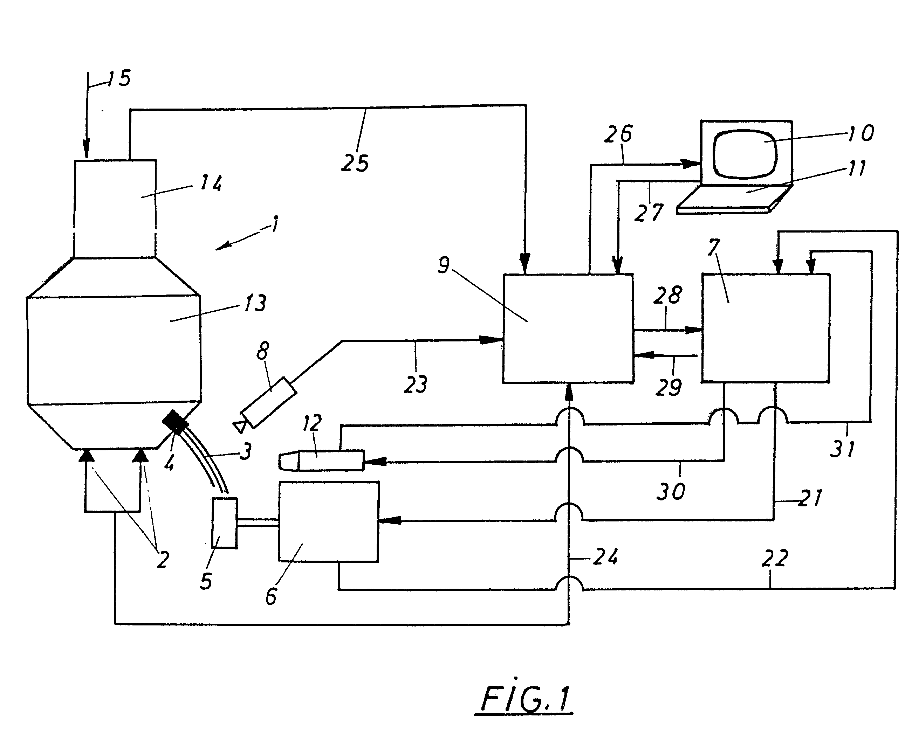

L'invention sera expliquée plus en détail à l'aide du schéma en fig. 1, qui représente un mode d'exécution possible du système suivant l'invention.

Il y est représenté un four à déversement continu 1, qui est de préférence un four électrique à résistance directe (électrodes immergées) pour la fusion de matières minérales. Le four est monté sur des pesons 2 (p.ex. à jauge de contrainte) qui permettent de déterminer en continu le poids du four respectivement la charge y contenue.

Le four 1 est principalement constitué de deux parties, le four proprement dit 13 comportant les électrodes de chauffage et un dispositif de remplissage 14 chargé par intermittence et assurant le déversement de la charge dans le creuset du four 13. Pendant l'opération de chargement discontinue, représenté par la flèche 15, le poids mesuré par les pesons 2 augmente momentanément. Le signal transmis par les pesons pendant ce temps n'est pas exploitable pour déterminer le débit de matière fondue 3 et un capteur signale à un système de calcul 9 (constitué par ex. par un microordinateur), par l'intermédiaire de la ligne 25 de ne pas considérer les signaux sur la ligne 24 en provenance des pesons 2.

Le débit du jet continu du four peut être déterminé par l'intermédiaire de la diminution du poids du four observé en dehors des opérations de chargement. Une méthode simple, donnant une précision acceptable du débit moyen, consiste à mesurer le poids du four juste après une opération de chargement et immédiatement avant l'opération suivante et de diviser la différence des poids mesurés par le temps qui s'est écoulé entre les 2 mesures.

Le débit du jet pourra également être déterminé en enregistrant le poids du four à un moment précis du cycle opératoire. Au même moment précis du ou des cycles suivants on enregistrera le nouveau poids. La différence de poids calculée à partir de ces valeurs enregistrées divisée par le temps écoulé entre les mesures donnera le débit moyen du jet. Pour améliorer la précision du calcul du débit, il est conseillé de choisir comme instant de lecture du poids du four une des différentes phases de l'opération de chargement dans laquelle il n'y a pas d'apport de matières. Cette méthode présume évidemment que la quantité de matière chargée à chaque opération varie peu.

Une précision encore meilleure peut être obtenue en calculant la moyenne des débits déterminés par les méthodes décrites précédemment.

Le jet de matière fondue 3 sort en continu du four 1 par le trou de coulée 4 et tombe sur le rotor 5 du spinner qui est couplé à un dispositif d'entraînement 6, dont la vitesse peut être variée en fonction de signaux en provenance d'un régulateur 7, par l'intermédiaire de la ligne 21. La vitesse réelle du dispositif d'entraînement 6 est mesurée et signalée au régulateur 7 à l'aide de la ligne 22.

Le débit d'air assurant le transport et la distribution des fibres dans la chambre à laine est produit par le système 12, qui reçoit ses signaux de commande du régulateur 7 par la ligne 30 et dont les

0080963

conditions de fonctionnement réelles sont signalées à celui-ci par la ligne 31.

Un capteur de mesure de la température 8 (on utilisera avantageusement une caméra pyrométrique) transmet un signal représentatif de la température du jet au système de calcul 9 par l'intermédiaire de la ligne 23. Une surveillance continue de l'échauffement de l'eau servant à refroidir la première roue du spinner peut, à débit constant, également être utilisée comme indicateur de la température du jet.

Le système de calcul 9 détermine à partir des données transmises par le capteur de mesure, la température réelle du jet. Il calcule également, en fonction du mélange de matières employé, la viscosité qui correspond à la température calculée du jet.

Le régulateur 7 est en communication avec le système de calcul 9 par l'intermédiaire de la ligne 28 (communications des conditions opti males de fonctionnement du système d'air 12 et du rotor 5) et de la ligne 29 (fonctionnement réel du système d'air 12 et du rotor 5).

A l'aide de la ligne 26 le système de calcul est relié au système d'affichage 10 servant à visualiser les données relatives au cycle de chargement, au poids du four, à la température, calculée du jet liquide, à la vitesse de rotation du spinner, au débit d'air etc.

Afin d'obtenir le meilleur résultat du système de régulation commandant l'installation d'effilage, il est avantageux d'emmagasiner des caractéristiques de matières premières courantes et différentes structures de laine dans la mémoire du système de calcul qui en tiendra compte dans la détermination des valeurs optimales de fonctionnement.

Dans le cas où le système de calcul est constitué par un microordinateur on utilisera avantageusement un clavier 11 pour introduire dans sa mémoire les données relatives aux propriétés et aux modes de fabrication de produits-types.

Ces données devront comprendre également les fonctions de variation de la viscosité avec la température pour le mélange de matières usuelles, nécessaires pour calculer la viscosité du jet à partir de sa température.

Dans le cas d'utilisation d'un clavier les informations passent de celui-ci au microordinateur par l'intermédiaire de la ligne 27.

Il est possible que la température ou le débit du jet dérive lentement en dehors des plages prévues pour la régulation du spinner. Dans ce cas, il est aisé de corriger la puissance de chauffage du four ou la quantité de matière chargée pour revenir dans la gamme de fonctionnement désirée. En effet, le débit du jet 3 peut être varié dans de faibles proportions par modification du niveau du bain de matière fondue dans le four 13. Un réglage plus flexible du débit peut être obtenu par l'installation d'une buse de coulée à ouverture variable. Ces réglages peuvent évidemment aussi être exécutés de façon automatique à partir des données calculées par le microordinateur.

Un cycle de fonctionnement de l'installation dont la période a été choisie égale à deux minutes, est décrit dans l'exemple suivant:

Toutes les deux minutes, une quantité de 200 kg de matière est déversée dans le réservoir 14.

L'opération de chargement, qui dure 1 minute est signalée au système de calcul 9, qui pendant ce temps conserve sur sa ligne de sortie 28 les données optimales de fonctionnement calculées juste avant le début de l'opération de rechargement.

Pendant toute la durée du cycle, cette charge est transférée de façon continue du réservoir 14 dans le four 13, de sorte à minimiser les variations de température de la masse fondue (8.000 kg) se trouvant dans celui-ci et à assurer une répartition optimale des matières solides au-dessus du bain liquide.

Dès la fin de l'opération de chargement 15, dans l'intervalle restant de 60 secondes où le poids du four diminue en continu en fonction du débit coulé, le système de calcul entreprend la détermination du débit à l'aide de deux mesures du poids transmises par les pesons 2 et du temps fixe s'écoulant entre ces 2 mesures.

Le débit du jet est introduit dans le régulateur 7 comme variable réglante. La valeur de référence de la boucle de régulation est une consigne de vitesse pour le spinner et une consigne de débit d'air pour la fibérisation optimale pour un débit du jet donné. Ces consignes sont introduites dans le régulateur au départ comme valeurs fixes.

La vitesse effective du spinner et le débit d'air de fibérisation effectif sont mesurés et transmis au régulateur pour lui permettre de réduire à un minimum l'écart entre valeurs effectives et consignes.

Ainsi dès l'apparition d'une variation de débit et/ou de viscosité le système adapte automatiquement la vitesse du spinner et/ou le débit d'air aux nouvelles conditions. Le rendement de la fibérisation ainsi que la qualité des fibres produites sont donc toujours optimales.

Lorsque les variations du débit ou de la viscosité du jet liquide dépassent des seuils prédéterminés on modifie respectivement l'ouverture de la buse de coulée ou la puissance du four.

La technique décrite s'applique aussi bien aux spinners monoroues qu'aux spinners multiroues où un ou plusieurs rotors peuvent être munis d'un tel système de régulation.

Revendications

1. Système de régulation de la marche d'une installation d'effilage centrifuge pour la fabrication de laine minérale, utilisant un spinner, de préférence multi-roues, sur lequel tombe un jet de matière fondue sortant d'un four à déversement continu, caractérisé en ce que le système comporte des moyens pour déterminer en continu le débit réel et la viscosité du jet de matière fondue, ainsi que des moyens de réglage de la vitesse de rotation du spinner, ainsi que le débit d'air assurant le transport des fibres depuis le spinner vers la chambre à laine en fonction de ces variables.

2. Système de régulation selon la revendication 1, caractérisé en ce que le débit du four est déterminé en continu par la détermination de son poids.

3. Système de régulation selon la revendication 1, caractérisé en ce que la viscosité du jet liquide (3) est déterminée en continu par une mesure continue de sa température, notamment à l'aide d'une caméra pyrométrique.

4. Système de régulation selon la revendication 1, caractérisé en ce que la viscosité du jet liquide (3) est déterminée en continu par une mesure de la différence de température de l'eau de refroidissement à l'entrée et à la sortie de la 1ère roue du spinner.

5. Système de régulation selon une des revendications 1 à 4, caractérisé en ce que le débit et la viscosité sont calculés par un microordinateur (9), qui est relié à un dispositif de régulation (7) de la vitesse du spinner.

6. Système de régulation pour une installation de fabrication de laine minérale comportant un four (13) et un spinner sur lequel tombe un jet de matière fondue (3) sortant du four (13) caractérisé:

- en ce que le four qui comporte un dispositif de remplissage (14), est monté sur des pesons (2)

- en ce qu'on met en oeuvre un capteur, qui mesure la température du jet de matière fondue (3);

- en ce que le microordinateur (9) calcule à partir des résultats de mesure fournis par les pesons (2) et par le capteur de température, le débit et la température du jet;

- en ce que le microordinateur (9) détermine la viscosité du jet, en fonction de sa composition et de sa température calculée;

- en ce que le microordinateur (9) détermine les conditions optimales de fonctionnement du spinner, en fonction du débit et de la viscosité du jet; et

- en ce que le microordinateur (9) est relié à un régulateur (7), qui commande le fonctionnement du spinner.

7. Procédé pour régler la marche d'une installation d'effilage centrifuge pour la fabrication de laine minérale utilisant un spinner sur lequel tombe un jet de matière minérale fondue, caractérisé par les points suivants:

- on chauffe un mélange de laitier, de roche ou de verre à température élevée dans un four de fusion, comportant un système de remplissage

- on communique la composition du mélange de matière fondue à un système de calcul dans lequel la relation entre viscosité et température de différents mélanges a été introduite auparavant.

- on détermine par l'intermédiaire du système de calcul la viscosité du jet à partir de mesures représentatives de sa température.

- on calcule le débit du jet à partir de la mesure du poids du four comportant un système de remplissage.

- on déduit les conditions optimales de fonctionnement du spinner à partir du débit et de la viscosité calculées du jet.

8. Procédé selon la revendication 7, caractérisé en ce qu'on recharge périodiquement le système de remplissage (14), alimentant le four et en ce qu'on utilise le débit du jet calculé à partir des résultats de mesure du poids du four recueillis à différents moments du cycle opératoire, pour régler le spinner.

9. Procédé selon les revendications 7 ou 8, caractérisé en ce qu'on utilise les données de fonctionnement calculées par le système de calcul pour régler en particulier la vitesse de rotation des roues du spinner, ainsi que la quantité de l'air assurant le transport des fibres dans la chambre à laine.

10. Procédé selon la revendication 7, caractérisé en ce qu'on utilise les données de fonctionnement calculées par le microordinateur pour régler la puissance de chauffage du four et/ou le débit du jet de matière fondue par l'intermédiaire d'une buse de coulée à ouverture variable.

FIG.1

**0080963**

Numéro de la demande

EP 82 63 0069

# Office européen des brevets

## RAPPORT DE RECHERCHE EUROPEENNE

### DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl. ³) |
|---|---|---|---|
| | --- | | C 03 B 37/05 |
| A | US-A-4 210 432 (BRELEN) | 1,2,6, 7 | C 03 B 37/07 |
| | *Colonnes 5-7; figure unique* | | |
| | ----- | | |

DOMAINES TECHNIQUES RECHERCHES (Int. Cl. ³)

C 03 B 3/00
C 03 B 37/00

Le présent rapport de recherche a été établi pour toutes les revendications

| Lieu de la recherche | Date d'achèvement de la recherche | Examinateur |
|---|---|---|
| LA HAYE | 18-02-1983 | VAN DEN BOSSCHE W.L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82